# EUROPÄISCHE PATENTANMELDUNG

(11) **EP 3 170 908 A1**
(43) Veröffentlichungstag der Anmeldung: **24.05.2017**
(21) Anmeldenummer: 16199415.7
(22) Anmeldetag: 17.11.2016
(51) Int. Cl.: C21B 3/06, C04B 5/06, C21C 7/076

(54) **VERFAHREN ZUR BEHANDLUNG EINER SCHLACKE BEI DER STAHLHERSTELLUNG**

(30) Priorität: 18.11.2015 DE 102015014825
(71) Anmelder: Wolf, Roman, 56203 Höhr-Grenzhausen (DE)
(72) Erfinder: Wolf, Roman, 56203 Höhr-Grenzhausen (DE)
(74) Vertreter: Frank, Hartmut

(57) **Zusammenfassung**

Die vorliegende Erfindung betrifft ein Verfahren zur Behandlung einer Schlacke bei der Stahlherstellung, wobei zur Schlackenkonditionierung wenigstens ein Zusatzstoff zu der Schlacke hinzugegeben wird, und wobei als Zusatzstoff Altglas verwendet wird, wobei das Altglas ausschließlich in Form von Hohlglas verwendet wird.

## Beschreibung

Die vorliegende Erfindung betrifft ein Verfahren zur Behandlung einer Schlacke bei der Stahlherstellung.

Bei der Stahlherstellung werden im Stahlwerk u.a. Zusatzstoffe auf eine Schlacke aufgegeben, um eine Schlackenkonditionierung zwecks Weiterverarbeitung zu marktfähigen Erzeugnissen z.B. zur Verwendung im Bauwesen durchzuführen. Zum Stand der Technik im Zusammenhang mit einer solchen Schlackenkonditionierung wird lediglich beispielhaft auf WO 00/75385 A1 verwiesen.

Des Weiteren ist es bekannt, bei der Behandlung einer Schlacke natürliche Rohstoffe wie z.B. Feldspat zuzugeben, welcher aufschmelzen und die Basizität der Schlacke durch Freigabe von SiO₂ ändern soll. Da der Feldspat eine Schmelztemperatur deutlich über 1.200°C besitzt, können eigens hergestellte Zusatzstoffe wie z.B. Flussmittel auf Basis von Alkalien (z.B. Na₂O, K₂O) hinzugeben werden, um das Aufschmelzen des Konditionierungsmittels (z.B. des Feldspats) durch Bildung niedrigschmelzender Verbindungen bzw. Eutektika zu beschleunigen.

Aufgrund der erforderlichen Chemikalien sowie auch der Mischvorgänge sind solche Verfahren jedoch aufwändig und kostenintensiv.

Vor dem obigen Hintergrund ist es eine Aufgabe der vorliegenden Erfindung, ein Verfahren zur Behandlung einer Schlacke bei der Stahlherstellung bereitzustellen, welches eine effektive und mit vergleichsweise geringem Aufwand durchführbare Konditionierung ermöglicht.

Diese Aufgabe wird gemäß den Merkmalen des unabhängigen Patentanspruchs 1 gelöst.

Bei einem erfindungsgemäßen Verfahren zur Behandlung einer Schlacke bei der Stahlherstellung wird zur Schlackenkonditionierung wenigstens ein Zusatzstoff zu der Schlacke hinzugegeben.

Das Verfahren ist dadurch gekennzeichnet, dass als Zusatzstoff Altglas verwendet wird, wobei das Altglas ausschließlich in Form von Hohlglas verwendet wird.

Unter "Hohlglas" wird im Rahmen der vorliegenden Anmeldung im Einklang mit der üblichen Terminologie Behälter- und Verpackungsglas (Haushaltsgläser, Flaschen, Marmeladengläser, Vasen o.dgl., jedoch keine Labor- bzw. Borsilikat-Gläser) verstanden.

Durch die ausdrückliche Beschränkung auf Hohlglas wird erfindungsgemäß dem Umstand Rechnung getragen, dass zum einen Borsilikat-Gläser in unerwünschter Weise die während des Stahlherstellungsprozesses zum Einsatz kommenden Materialien etwa der Schmelzgefäße massiv angreifen würden, die Kristallbildung des Eisens beeinflussen und zudem auch umweltbelastend sowie gesundheitsgefährdend sind. Zum anderen wird auch Flachglas sowie Kunststoff-Verbund-Glas vermieden, um etwa eine unerwünschte ausgeprägte Qualmentwicklung und zusätzliches CO₂ zu vermeiden.

Der Erfindung liegt insbesondere das Konzept zugrunde, anstelle von natürlichen oder eigens hergestellten und in zusätzlich aufwändigen Mischprozessen aufbereiteten Zusatzstoffen Altglas als Recycleprodukt zu venivenden.

Hierdurch werden insbesondere natürliche Resourcen geschont. Ferner ist, da das Altglas einen Schmelzpunkt unterhalb von 1.100°C besitzt, keine Zugabe von Flussmitteln erforderlich, zumal Alkalimetalle im Altglas bereits naturgemäß vorhanden sind.

Zudem wird erfindungsgemäß ausgenutzt, dass die chemische Zusammensetzung des Altglases sehr gut dazu geeignet ist, die Basizität der Schlacke wie gewünscht einzustellen.

Zudem ist das erfindungsgemäß verwendete Altglas als Recycleprodukt in entsprechend (typischerweise durch Trennen, Reinigen, Brechen und Sieben des zuvor z.B. in Containern gesammelten Altglases) aufbereiteter Form bei auf Glas-Recycling spezialisierten Unternehmen vergleichsweise kostengünstig verfügbar und insbesondere auch in der erforderlichen Reinheit (z.B. befreit von anorganischen oder organischen Verunreinigungen bzw. Störstoffen) sowie geeigneten Korngrößen erhältlich.

Das Altglas kann gegebenenfalls auch ungereinigt verwendet werden (da gegebenenfalls vorhandene Keramik- oder Metallanteile oder organische Reste typischerweise nicht störend sind).

Dabei kann erfindungsgemäß grundsätzlich recyceltes Hohlglas unterschiedlichen Ursprungs (z.B. als Behälterglas, Verpackungsglas, Hohlglas) oder unterschiedlicher Farben (z.B. Braun-, Grün- oder Weissglas) verwendet werden.

Gemäß einer Ausführungsform erfolgt die Zugabe des Hohlglases während der Sekundärmetallurgie. Unter "Sekundärmetallurgie" werden im Rahmen der vorliegenden Anmeldung im Einklang mit der üblichen Terminologie sämtliche metallurgische, zur Verbesserung der Schmelze im Stahlwerk eingesetzten Maßnahmen verstanden, welche nach Abschluss der im Hochofen durchgeführten Primärmetallurgie und vor der Überführung in das Walzwerk getroffen werden und bei denen das beim Abstich erhaltene flüssige Roheisen bzw. die Stahlschmelze weiterbehandelt wird. Hierbei erfolgt erfindungsgemäß die Zugabe des Hohlglases vor der metallurgischen Behandlung in der Roheisenpfanne. Hierzu kann die Zugabe des Hohlglases entweder in die leere Roheisenpfanne oder unmittelbar nach dem Befüllen der Roheisenpfanne erfolgen. Eine beispielhafte Analyse der Zusammensetzung von im Rahmen der Erfindung einsetzbarem Hohlglas (Flaschenglas etc.) ist in Tabelle 1 angegeben.

**Tabelle 1:**

| | Hohlglas | Hohlglas | Hohlglas |
|---|---|---|---|
| | braun | grün | weiss |
| | | | |
| SiO₂ | 70.99 | 70.93 | 72.03 |
| Na₂O | 13.28 | 13.24 | 13.17 |
| K₂O | 0.79 | 0.8 | 0.57 |
| MgO | 2.3 | 2.3 | 2.23 |
| CaO | 10.07 | 10,01 | 10.15 |
| Al₂O₃ | 1.94 | 1.96 | 1.48 |
| Fe₂O₃ | 0.31 | 0.33 | 0.07 |
| P₂O₅ | 0.01 | 0.01 | 0.01 |
| S | 0.02 | 0 | 0 |
| SO₃ | | 0.05 | 0.13 |
| ZrO₂ | 0.02 | 0.02 | 0.015 |
| BaO | 0.03 | 0.03 | 0.02 |
| Cl | 0.02 | 0.01 | 0.02 |
| | | | |
| Summe | 99.78 | 99.69 | 99.895 |

Gemäß einer Ausführungsform wird als Zusatzstoff durch Verkleinerung aufbereitetes Altglas verwendete.

Gemäß einer Ausführungsform weist das Altglas eine mittlere Korngröße im Bereich von 1 mm bis 100mm, insbesondere im Bereich von 5mm bis 30mm, auf. Die Verwendung von Korngrößen in diesem Bereich ist insofern vorteilhaft, als beim Aufgeben von Zusatzstoffen auf die heiße Schmelze bzw. Schlacke grundsätzlich die Gefahr besteht, dass diese Zusatzstoffe aufgewirbelt werden und hierbei Maschinenkomponenten kontaminieren (z.B. eine Absaugeinrichtung verstopfen) können. Dies kann durch die angegebene, vergleichsweise grobe Körnung vermieden oder zumindest vermindert werden.

Gemäß einer Ausführungsform wird als Zusatzstoff Bor-freies Altglas verwendet. Dies ist insofern vorteilhaft, als Bor (B) eine Reaktion mit dem Material der feuerfesten Auskleidung eingehen kann, wodurch dieses massiv angegriffen bzw. korrodiert werden kann (wobei auch der Schmelzpunkt der feuerfesten Auskleidung herabgesetzt werden kann).

Gemäß einer Ausführungsform weist das als Zusatzstoff verwendete Altglas Quarzglas (SiO₂), Alkalimetalle (insbesondere Natrium (Na) und Kalium (K)), Erdalkalimetalle (insbesondere Magnesium (Mg) und Kalzium (Ca)) und Aluminiumoxid (Al₂O₃) auf, wobei der Gesamtanteil anderer Bestandteile (beispielsweise Fe₂O₃, TiO₂ oder ZnO) kleiner als 0.5%, insbesondere kleiner als 0.3%, ist.

In Ausführungsformen können der Schmelze weitere Zusatzstoffe, insbesondere Kalk oder kaustischer Magnesit, hinzugegeben werden, um gegebenenfalls weitere gewünschte Effekte wie z.B. eine Beruhigung der Schmelze unter Vermeidung von Turbulenzen oder eine Entfernung von weiteren Verunreinigungen zu erreichen, z.B. in der Entschwefelung.

Die Erfindung ist hinsichtlich des jeweils zur Stahlherstellung eingesetzten Verfahrens nicht auf ein bestimmtes Verfahren beschränkt sondern in beliebigen Verfahren anwendbar, in welchen eine Schlacke konditioniert werden soll.

## Patentansprüche

1. Verfahren zur Behandlung einer Schlacke bei der Stahlherstellung, wobei zur Schlackenkonditionierung wenigstens ein Zusatzstoff zu der Schlacke hinzugegeben wird,
**dadurch gekennzeichnet, dass**
als Zusatzstoff Altglas verwendet wird, wobei das Altglas ausschließlich in Form von Hohlglas verwendet wird.

2. Verfahren nach Anspruch 1, **dadurch gekennzeichnet, dass** die Zugabe des Hohlglases während der Sekundärmetallurgie erfolgt.

3. Verfahren nach Anspruch 1 oder 2, **dadurch gekennzeichnet, dass** das als Zusatzstoff verwendete Altglas durch Verkleinerung aufbereitetes Altglas ist.

4. Verfahren nach einem der Ansprüche 1 bis 3, **dadurch gekennzeichnet, dass** das als Zusatzstoff verwendete Altglas eine mittlere Korngröße im Bereich von 1mm bis 100mm, insbesondere im Bereich von 5mm bis 30mm, aufweist.

5. Verfahren nach einem der vorhergehenden Ansprüche, **dadurch gekennzeichnet, dass** als Zusatzstoff Bor-freies Altglas verwendet wird.

6. Verfahren nach einem der vorhergehenden Ansprüche, **dadurch gekennzeichnet, dass** das als Zusatzstoff verwendete Altglas Quarzglas (SiO₂), Alkalimetalle, Erdalkalimetalle und Aluminiumoxid (Al₂O₃) aufweist, wobei der Gesamtanteil anderer Bestandteile kleiner als 0.5%, insbesondere kleiner als 0.3%, ist.
